# EUROPEAN PATENT APPLICATION

(11) **EP 4 282 798 A1**
(43) Date of publication of application: **29.11.2023**
(21) Application number: 22857422.4
(22) Date of filing: 21.06.2022
(51) Int. Cl.: B65H 37/00, C01B 33/149, C01B 33/152

(54) **DEVICE FOR PREPARING AEROGEL FELT AND METHOD THEREFOR**

(30) Priority: 20.08.2021 CN 202110963658
(71) Applicant: Gong Yi Van-research Innovation Composite Material Co., Ltd, Zhengzhou, Henan 451200 (CN); Contemporary Amperex Technology Co., Limited, Ningde, Fujian 352100 (CN)
(72) Inventor: GUO, Haijian, Ningde, Fujian 352100 (CN); LIAO, Boxiang, Ningde, Fujian 352100 (CN); PAN, Xin, Ningde, Fujian 352100 (CN)
(74) Representative: Rowlands, Stuart Michael
(86) International application number: PCT/CN2022/100172
(87) International publication number: WO 2023/020109

(57) **Abstract**

The present application relates to a device for preparing aerogel felt and a method therefor, and belongs to the technical field of aerogel felt preparation. The device for preparing aerogel felt comprises: a first transmission apparatus, which is used to transport a felt substrate; a first spraying apparatus, which is used to spray sol onto the felt substrate on the first transmission apparatus; a second transmission apparatus, which is provided downstream of the first transmission apparatus and is used to transport the felt substrate on which sol is sprayed; and a second spraying apparatus, which is used to spray a gel catalyst onto the felt substrate on the second transmission apparatus. The device for preparing aerogel felt and a method therefor can improve the preparation efficiency of aerogel felt.

## Description

### Cross-Reference to Related Applications

The present application claims priority to Chinese Patent Application No. 202110963658.2 entitled "DEVICE AND METHOD FOR PREPARING AEROGEL BLANKET" and filed on August 20, 2021, which is incorporated herein by reference in its entirety.

### Technical Field

The present application relates to the technical field of preparation of aerogel blankets, and in particular to a device and method for preparing an aerogel blanket.

### Background Art

Silica aerogel, as an emerging super thermal insulation material, has a very low thermal conductivity, which is far lower than the thermal conductivity of 0.25W/m K of static air at room temperature, has a thermal insulation heat-preservation effect significantly better than those of other materials, has a low density, is waterproof, flame retardant, environmentally friendly, anti-corrosion, and not easy to age, and has a prolonged service life, and is thus called a super heat-preservation thermal insulation material. Due to the poor mechanical strength of the silica aerogel itself and the fact that large pieces of aerogel without cracks can only be obtained by a supercritical process, the cost is extremely high. At present, silica aerogel is generally combined with inorganic fibers to manufacture heat-preservation aerogel blankets, heat-preservation boards or other specially-shaped parts, to give full play to the excellent heat insulation heat-preservation performance of aerogel materials.

A method for preparing a silica aerogel blanket includes compounding a prepared sol with a blanket substrate by means of dipping or spraying, heating the sol to solidify same in the blanket substrate so as to form aerogel, then chemically modifying the composite blanket body, and finally performing a supercritical or normal pressure drying process to obtain the aerogel blanket.

In the prior art, the preparation efficiency of the silica aerogel blanket is low.

### Summary of the Invention

An objective of the present application is to provide a device and method for preparing an aerogel blanket, which can improve the preparation efficiency of the aerogel blanket.

The present application is achieved by the following technical solutions.

In an aspect, a device for preparing an aerogel blanket is provided according to an embodiment of the present application, the device comprising:
a first transport means configured to transport a blanket substrate;
a first spray means configured to spray a sol to the blanket substrate on the first transport means;
a second transport means arranged downstream of the first transport means and configured to transport the blanket substrate sprayed with the sol; and
a second spray means configured to spray a gel catalyst to the blanket substrate on the second transport means.

In the device for preparing an aerogel blanket according to the embodiment of the present application, through the cooperation of the first spray means and the first transport means, the first spray means sprays the sol to the blanket substrate while the first transport means transports the blanket substrate, facilitating the full impregnation of the blanket substrate with the sol; and through the cooperation of the second spray means and the second transport means, the second spray means sprays the gel catalyst to the blanket substrate sprayed with the sol while the second transport means transports the blanket substrate, which enables the blanket substrate to be fully impregnated with the gel catalyst, and facilitates the rapid gel reaction between the gel catalyst and the sol to form a wet gel, thereby shortening the preparation period of the aerogel blanket and improving the preparation efficiency of the aerogel blanket.

According to some embodiments of the present application, each transport means comprises a transport drum, a drum wall of the transport drum being configured to transport the blanket substrate in a circumferential direction of the transport drum and being provided with an opening, the first spray means is configured to spray the sol from the inside of the corresponding transport drum to the blanket substrate, and the second spray means is configured to spray the gel catalyst from the inside of the corresponding transport drum to the blanket substrate.

In the above embodiments, the spray means located inside the transport drum is allowed to spray the sol or the gel catalyst to the blanket substrate transported by the transport drum through the opening, so as to facilitate the impregnation of the blanket substrate with the sol or the gel catalyst while transporting the blanket substrate, ensuring uniform impregnation with the sol or the gel catalyst.

According to some embodiments of the present application, the drum wall is composed of a plurality of transmission shafts arranged at intervals around a central axis of the transport drum, each transmission shaft being parallel to the central axis of the transport drum, and a gap between two adjacent transmission shafts forms the opening; and

the transport drum further comprises a frame to which the plurality of transmission shafts are fixed.

In the above embodiments, the frame is used to install and fix the plurality of transmission shafts, so that the structure of the drum wall is simple and the assembly is convenient.

According to some embodiments of the present application, each transport means further comprises a first driving mechanism configured to drive the transport drum to rotate about its own central axis.

In the above embodiments, the transport drum is driven to rotate about its own central axis by the first driving mechanism, so as to transport the blanket substrate.

According to some embodiments of the present application, each transmission shaft is connected to the frame in such a way that it is rotatable about its own central axis, and the plurality of transmission shafts are connected to each other via a linkage assembly; and
each transport means further comprises a first driving mechanism configured to drive each transmission shaft to rotate about its own central axis relative to the frame.

In the above embodiments, the linkage assembly is used to realize the linkage connection of the plurality of transmission shafts, so that the first driving mechanism drives the plurality of transmission shafts to rotate synchronously, thereby transporting the blanket substrate.

According to some embodiments of the present application, the device for preparing an aerogel blanket further comprises:
a first guide roller arranged adjacent to the drum wall and configured to guide the blanket substrate to the drum wall; and
a second guide roller arranged adjacent to both the drum wall and the first guide roller and configured to guide the blanket substrate out from the drum wall.

In the above embodiments, the first guide roller and the second guide roller are used to guide the blanket substrate to and out from the drum wall, and the first guide roller and the second guide roller are arranged adjacent to each other, so that the blanket substrate runs around the drum wall approximately by one circle to ensure that the blanket substrate and the drum wall have a large contact area, and the transport time is long, facilitating the uniform impregnation with the sol or the gel catalyst.

According to some embodiments of the present application, each spray means comprises a spray pipe arranged inside the corresponding transport drum, a central axis of the spray pipe coinciding with the central axis of the transport drum, a pipe wall of the spray pipe being provided with a through hole, and the spray pipe being configured to be rotatable about its own central axis, so as to spray the sol or the gel catalyst from the spray pipe onto the blanket substrate through the through hole.

In the above embodiments, through the rotation of the spray pipe, the sol or the gel catalyst is sprayed onto the blanket substrate during the rotation of the spray pipe, facilitating the impregnation of the blanket substrate with the sol or the gel catalyst.

According to some embodiments of the present application, a rotation direction of the spray pipe is opposite to a transport direction of the corresponding transport drum.

In the above embodiments, the fact that the rotation direction of the spray pipe is opposite to the transport direction of the corresponding transport drum facilitates the impregnation of the blanket substrate with the sol or the gel catalyst sprayed to the blanket substrate, ensuring uniform impregnation with the sol or the gel catalyst.

According to some embodiments of the present application, each spray means further comprises a second driving mechanism configured to drive the spray pipe to rotate about its own central axis.

In the above embodiments, the second driving mechanism is used to drive the spray pipe to rotate about its own central axis, so as to spray the sol or the gel catalyst to the blanket substrate, facilitating the impregnation of the blanket substrate with the sol or the gel catalyst.

According to some embodiments of the present application, the device for preparing an aerogel blanket further comprises: a first storage container configured to store the sol; a first delivery pipeline connected to the first storage container and the spray pipe of the first spray means, and configured to deliver the sol from the first storage container to the spray pipe of the first spray means; a second storage container configured to store the gel catalyst; and a second delivery pipeline connected to the second storage container and the spray pipe of the second spray means, and configured to deliver the gel catalyst from the second storage container to the spray pipe of the second spray means.

In the above embodiments, the sol is stored in the first storage container, and the first delivery pipeline is connected to the first storage container and the spray pipe of the first spray means, so that the supply of the sol is facilitated and the uniform impregnation of the blanket substrate with the sol is ensured; and the gel catalyst is stored in the second storage container, and the second delivery pipeline is connected to the second storage container and the spray pipe of the second spray means, so that the supply of the gel catalyst is facilitated and the uniform impregnation of the blanket substrate with the gel catalyst is ensured.

According to some embodiments of the present application, two first transport means and two first spray means are provided, the two first transport means are arranged in sequence in a running direction of the blanket substrate, the two first spray means are in one-to-one correspondence with the two first transport means, and among the two first spray means, the upstream first spray means is configured to spray the sol to a first side of the blanket substrate, and the downstream first spray means is configured to spray the sol to a second side of the blanket substrate, the first side and the second side being two opposite sides in a thickness direction of the blanket substrate.

In the above embodiments, the sol is sprayed to the first side and the second side of the blanket substrate to ensure the uniform impregnation of the blanket substrate with the sol.

According to some embodiments of the present application, transport directions of the two first transport means are opposite to each other.

In the above embodiments, the transport directions of the two first transport means are opposite to each other, so as to facilitate the layout of each means and make reasonable use of the installation space.

According to some embodiments of the present application, two second transport means and two second spray means are provided, the two second transport means are arranged in sequence in a running direction of the blanket substrate, the two second spray means are in one-to-one correspondence with the two second transport means, and among the two second spray means, the upstream second spray means is configured to spray the gel catalyst to a first side of the blanket substrate, and the downstream second spray means is configured to spray the gel catalyst to a second side of the blanket substrate, the first side and the second side being two opposite sides in a thickness direction of the blanket substrate.

In the above embodiments, the gel catalyst is sprayed to the first side and the second side of the blanket substrate to ensure the uniform impregnation of the blanket substrate with the gel catalyst.

According to some embodiments of the present application, transport directions of the two second transport means are opposite to each other.

In the above embodiments, the transport directions of the two second transport means are opposite to each other, so as to facilitate the layout of each means and make reasonable use of the installation space.

In another aspect, a method for preparing an aerogel blanket is provided according to an embodiment of the present application, the method comprising:
transferring a blanket substrate to a first transport means, and transporting the blanket substrate by the first transport means;
spraying a sol to the blanket substrate on the first transport means;
transferring the blanket substrate sprayed with the sol to a second transport means, and transporting the blanket substrate by the second transport means; and
spraying a gel catalyst to the blanket substrate on the second transport means.

In the method for preparing an aerogel blanket according to the embodiment of the present application, the blanket substrate is transported by the first transport means, and the sol is sprayed to the blanket substrate while the first transport means transports the blanket substrate, so as to facilitate the uniform impregnation with the sol; and the blanket substrate sprayed with the sol is transported by the second transport means, so that the gel catalyst is sprayed to the blanket substrate while transporting the blanket substrate, facilitating the rapid gel reaction between the sol and the gel catalyst to form a wet gel, thereby shortening the preparation period and improving the preparation efficiency of the aerogel blanket.

Additional aspects and advantages of the present application will be set forth in part in the following description, and in part will be apparent from the following description, or may be learned by practice of the present application.

### Description of Drawings

The drawings described herein are intended to provide a further understanding of the present application, which constitute a part of the present application. The illustrative embodiments of the present application and the description thereof are for explaining the present application and do not constitute an undue limitation of the present application. In the drawings:
Fig. 1 is a schematic structural diagram of a device for preparing an aerogel blanket provided in an embodiment of the present application;
Fig. 2 is a schematic structural diagram of a transport means provided in an embodiment of the present application;
Fig. 3 is a schematic assembly diagram of a transport means provided in an embodiment of the present application;
Fig. 4 is a schematic structural diagram of a transport means provided in another embodiment of the present application;
Fig. 5 is a schematic assembly diagram of a transport means provided in another embodiment of the present application;
Fig. 6 is a schematic assembly diagram of a spray means and a transport means provided in an embodiment of the present application;
Fig. 7 is a schematic structural diagram of a spray means provided in an embodiment of the present application;
Fig. 8 is a schematic structural diagram of a device for preparing an aerogel blanket provided in another embodiment of the present application;
Fig. 9 is a schematic structural diagram of a device for preparing an aerogel blanket provided in still another embodiment of the present application; and
Fig. 10 is a schematic flowchart of a method for preparing an aerogel blanket provided in an embodiment of the present application.

In the accompanying drawings, the figures are not drawn to scale.

List of reference signs: 1000 - Device for preparing an aerogel blanket; 101 - First transport means; 102 - Second transport means; 11 - Transport drum; 110 - Opening; 111 - Transmission shaft; 112 - Frame; 1121 - First ring gear; 12 - First gear; 13 - Linkage assembly; 131 - Chain; 132 - Sprocket; 14 - Drive sprocket; 15 - Drive chain; 201 - First spray means; 202 - Second spray means; 21 - Spray pipe; 211 - Through hole; 212 - Second ring gear; 22 - Second driving mechanism; 301 - First storage container; 302 - First delivery pipeline; 401 - Second storage container; 402 - Second delivery pipeline; 501 - Unwinding roller; 502 - Winding roller; 503 - First guide roller; 504 - Second guide roller; 505 - Third guide roller; 506 - Fourth guide roller; 507 - Fifth guide roller; 601 - Hollow cylindrical support drum; 602 - Holder; Z - Blanket substrate; Z1 - First side; Z2 - Second side.

### Detailed Description

Implementations of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", etc. are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, "a plurality of' means two or more (including two), similarly, "a plurality of groups" means two or more groups (including two groups), and "a plurality of sheets" means two or more sheets (including two sheets).

A silica aerogel blanket has a good thermal insulation property, and is used as a thermal insulation member in environments that require thermal insulation, such as in a battery box, for thermal insulation between battery cells.

The inventors have found through research that the low preparation efficiency of the silica aerogel blanket is mainly due to the long impregnation cycle between the blanket substrate and the prepared sol (silica sol), and the insufficient impregnation of the blanket substrate with the sol. It is further found through research that a method for impregnating a rolled continuous blanket substrate with a sol is to put the rolled blanket substrate into a dipping tank for impregnation. This method has the problem of uneven impregnation because the surface blanket substrate is more impregnated with the sol, but the core blanket substrate is less impregnated with the sol, so that the aerogel is non-uniformly distributed when the blanket substrate is deployed for use; and this method requires a long impregnation time, resulting in the disadvantage of a long preparation period. In addition, a method for spraying a sol to a rolled blanket substrate is to deploy the rolled blanket substrate and impregnate same with the sol by means of spraying. This method has the problem of insufficient sol impregnation, which affects the quality of the silica aerogel blanket and in turn affects the preparation efficiency of the silica aerogel blanket.

In view of this, the present application provides a device and method for preparing an aerogel blanket. The device for preparing an aerogel blanket includes a first transport means, a first spray means, a second transport means and a second spray means. The first transport means is configured to transport the blanket substrate. The first spray means is configured to spray a sol to the blanket substrate on the first transport means. The second transport means is arranged downstream of the first transport means, and configured to transport the blanket substrate sprayed with the sol. The second spray means is configured to spray a gel catalyst to the blanket substrate on the second transport means. The first spray means is used to spray the sol to the blanket substrate on the first transport means, so that the sol is sprayed to the blanket substrate while transporting the blanket substrate, facilitating the full impregnation of the blanket substrate with the sol; and the second spray means is used to spray the gel catalyst to the blanket substrate sprayed with the sol, which enables the blanket substrate to be fully impregnated with the gel catalyst, and facilitates the rapid gel reaction between the gel catalyst and the sol to form a wet gel, thereby shortening the preparation period of the aerogel blanket and improving the preparation efficiency of the aerogel blanket.

The device for preparing an aerogel blanket according to the embodiments of the present application will be described below with reference to the accompanying drawings.

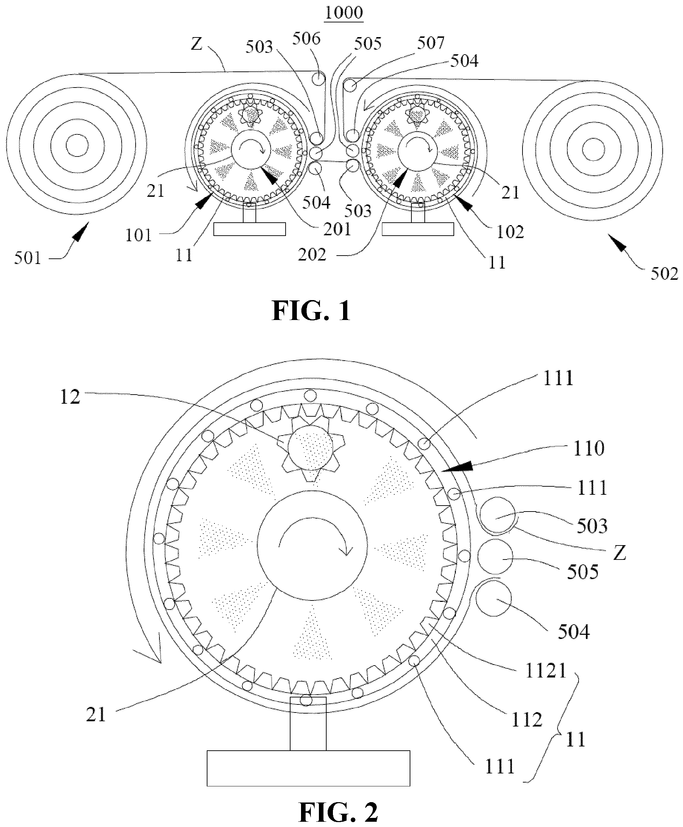

Referring to Fig. 1, a schematic structural diagram of a device for preparing an aerogel blanket 1000 according to an embodiment of the present application is shown in Fig. 1. According to some embodiments of the present application, as shown in the figures, the device for preparing an aerogel blanket 1000 includes a first transport means 101, a first spray means 201, a second transport means 102, and a second spray means 202.

The first transport means 101 is configured to transport the blanket substrate Z to realize a continuous delivery of the blanket substrate Z. The first spray means 201 is configured to spray a sol to the blanket substrate Z on the first transport means 101, so that the blanket substrate Z is impregnated with the sol while transporting the blanket substrate Z. The second transport means 102 is arranged downstream of the first transport means 101, and the second transport means 102 is configured to transport the blanket substrate Z sprayed with sol, so as to realize the continuous delivery of the blanket substrate Z. The second spray means 202 is configured to spray a gel catalyst to the blanket substrate Z on the second transport means 102. That is, the second spray means 202 sprays the gel catalyst to the blanket substrate Z that has been sprayed with the sol, thereby facilitating the entry of the gel catalyst into the blanket substrate Z transported by the second transport means 102, so that the gel catalyst and the sol undergo a rapid gel reaction on the blanket substrate Z to form a wet gel.

It should be noted that upstream and downstream refer to the sequential relationship of the process of preparing the blanket substrate Z. For example, the arrangement of the second transport means 102 downstream of the first transport means 101 means that the blanket substrate Z is first transported by the first transport means 101, and the blanket substrate Z is then transported by the second transport means 102.

The sol may be a silica sol, which includes orthosilicate, ethanol and water. The orthosilicate, the ethanol and the water are prepared in a molar ratio to obtain a silica solution, an acid is then added into the silica solution, and the silica solution is adjusted to have a pH of 3 to 4 to obtain the silica sol.

The silica sol is prepared from orthosilicate, ethanol and water in a molar ratio of orthosilicate to ethanol to water of 1:(4-8):(3-5). The orthosilicate is one of ethyl orthosilicate and methyl orthosilicate. The acid is one of hydrochloric acid, citric acid, and acetic acid. The silica sol further includes a modifier, which is one of hexamethyldisiloxane or trimethylchlorosilane. The molar ratio of modifier to ethanol is 1 :(3-5).

The gel catalyst may be an aqueous ammonia solution with a mass fraction of 15-30 wt%.

The blanket substrate Z may be a fiber blanket, such as a glass fiber or ceramic fiber blanket body.

In the device for preparing an aerogel blanket 1000 according to the embodiment of the present application, through the cooperation of the first spray means 201 and the first transport means 101, the first spray means 201 sprays the sol to the blanket substrate Z on the first transport means 101 while the first transport means 101 transports the blanket substrate Z, facilitating the full impregnation of the blanket substrate Z with the sol; and through the cooperation of the second spray means 202 and the second transport means 102, the second spray means 202 sprays the gel catalyst to the blanket substrate Z on the second transport means 102 while the second transport means 102 transports the blanket substrate Z sprayed with the sol, facilitating the full impregnation of the blanket substrate Z with the gel catalyst, and facilitating the rapid gel reaction between the gel catalyst and the sol to form a wet gel, thereby shortening the preparation period of the aerogel blanket and improving the preparation efficiency of the aerogel blanket.

The device for preparing an aerogel blanket 1000 is used for continuous preparation of the aerogel blanket from the blanket substrate Z. As shown in Fig. 1, the device for preparing an aerogel blanket 1000 further includes an unwinding roller 501 and a winding roller 502. The blanket substrate Z is wound around the unwinding roller 501, the unwinding roller 501 is configured to unwind the blanket substrate Z, the gelled blanket substrate Z is wound around the winding roller 502, and the winding roller 502 is configured to wind the gelled blanket substrate Z.

According to some embodiments of the present application, as shown in Fig. 1, the device for preparing an aerogel blanket 1000 further includes a fourth guide roller 506 and a fifth guide roller 507. The fourth guide roller 506 is arranged between the unwinding roller 501 and the first transport means 101, the fourth guide roller 506 is configured to guide the blanket substrate Z to the first transport means 101, the fifth guide roller 507 is arranged between the second transport means 102 and the winding roller 502, and the fifth guide roller 507 is configured to guide the blanket substrate Z from the second transport means 102 to the winding roller 502.

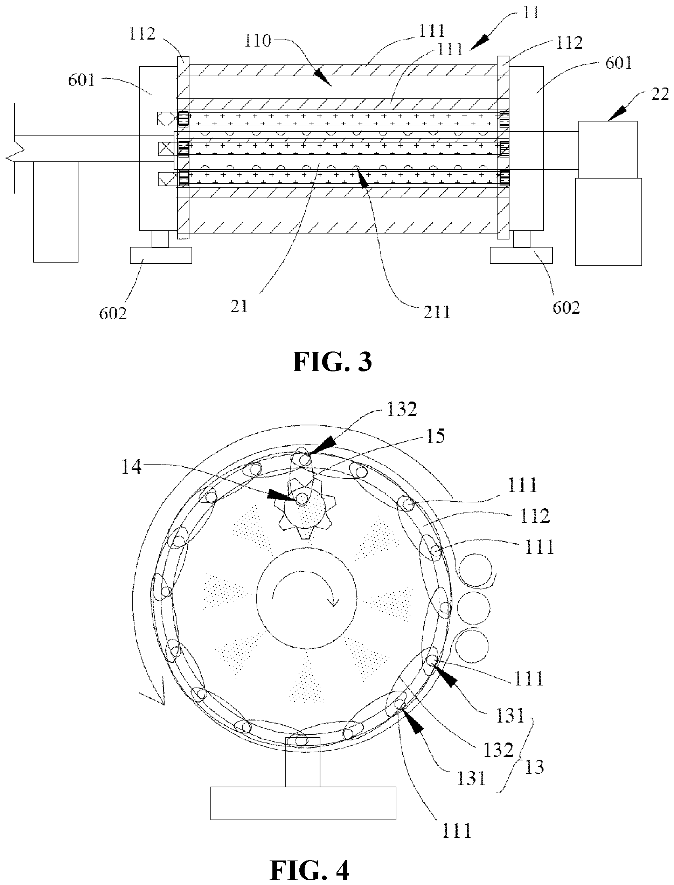

Fig. 2 shows a schematic structural diagram of a transport means according to an embodiment of the present application; and Fig. 3 shows a schematic assembly diagram of the transport means according to an embodiment of the present application. According to some embodiments of the present application, as shown in Figs. 1, 2 and 3, each transport means (a collective term of the first transport means 101 and the second transport means 102) includes a transport drum 11. A drum wall of the transport drum 11 is configured to transport the blanket substrate Z in a circumferential direction of the transport drum 11, the drum wall is provided with an opening 110, the first spray means 201 is configured to spray the sol from the inside of the corresponding transport drum 11 to the blanket substrate Z, and the second spray means 202 is configured to spray the gel catalyst from the inside of the corresponding transport drum 11 to the blanket substrate Z. The spray means located inside the transport drum 11 is allowed to spray the sol or the gel catalyst to the blanket substrate Z transported by the transport drum 11 through the opening 110, so as to facilitate the impregnation of the blanket substrate Z with the sol or the gel catalyst while transporting the blanket substrate Z, ensuring uniform impregnation with the sol or the gel catalyst.

Specifically, when the first spray means 201 and the first transport means 101 cooperatively work together, the first spray means 201 can spray the sol from the inside of the transport drum 11 through the opening 110 of the drum wall of the transport drum 11 of the first transport means 101 to the blanket substrate Z transported by the transport drum 11, so that the blanket substrate Z is impregnated with the sol, ensuring the full impregnation with the sol. When the second spray means 202 and the second transport means 102 cooperatively work together, the second spray means 202 can spray the gel catalyst from the inside of the transport drum 11 through the opening 110 of the drum wall of the transport drum 11 of the second transport means 102 to the blanket substrate Z transported by the transport drum 11, so that the blanket substrate Z sprayed with the sol is impregnated with the gel catalyst, thereby ensuring the full impregnation with the gel catalyst, and facilitating the rapid gel reaction between the gel catalyst and the sol to form a wet gel and the uniform distribution of the gel on the blanket substrate Z.

According to some embodiments of the present application, as shown in Figs. 2 and 3, the drum wall is composed of a plurality of transmission shafts 111 arranged at intervals around a central axis of the transport drum 11. Each transmission shaft 111 is parallel to the central axis of the transport drum 11, and a gap between two adjacent transmission shafts 111 forms an opening 110. The transport drum 11 further includes a frame 112, and the plurality of transmission shafts 111 are fixed to the frame 112. The frame 112 is used to realize the installation and fixation of the plurality of transmission shafts 111, so that the structure of the drum wall is simple, and the assembly is convenient.

When the transport drum 11 transports the blanket substrate Z, the blanket substrate Z is supported by at least some transmission shafts 111 among the plurality of transmission shafts 111. The first spray means 201 sprays the sol from the gap between two adjacent transmission shafts 111 of the corresponding transport drum to the blanket substrate Z, so that the blanket substrate Z is uniformly impregnated with the sol while transporting the blanket substrate Z. The second spray means 202 sprays the gel catalyst from the gap between two adjacent transmission shafts 111 of the corresponding transport drum to the blanket substrate Z, so that the blanket substrate Z is uniformly impregnated with the gel catalyst while transporting the blanket substrate Z, and the gel catalyst and the sol undergo a rapid gel reaction to form a wet gel.

As shown in Figs. 2 and 3, the frame 112 is of a hollow cylindrical structure, two frames 112 are provided, and two ends of each transmission shaft 111 are connected to the two frames 112.

According to some embodiments of the present application, the transport drum 11 can rotate about its own central axis, so as to transport the blanket substrate Z.

According to some embodiments of the present application, each transport means further includes a first driving mechanism (not shown in the figures) configured to drive the transport drum 11 to rotate about its own central axis. The transport drum 11 is driven to rotate about its own central axis by the first driving mechanism, so as to transport the blanket substrate.

An output end of the first driving mechanism is drivably connected to the transport drum 11, and the first driving mechanism provides a driving force to drive the transport drum 11 to rotate about its own central axis. For example, the first driving mechanism may be an electric motor. As shown in Figs. 2 and 3, an output shaft of the electric motor is connected to a first gear 12, the frame 112 of the transport drum 11 is of a hollow cylindrical structure, two frames 112 are provided, and an inner wall of one of the frames 112 is provided with a first ring gear 1121, the first ring gear 1121 meshes with the first gear 12, the first driving mechanism works to drive the first gear 12 to rotate, and the first gear 12 drives the first ring gear 1121 to rotate and then drives the transport drum 11 to rotate about its own central axis.

It should be noted that the first gear 12 may be directly mounted on the output shaft of the electric motor. Alternatively, the first gear 12 is mounted on a shaft, and the first gear 12 or the shaft on which the first gear 12 is mounted may be connected to the output shaft of the electric motor via a first transmission assembly. For example, the first transmission assembly may be a gear transmission assembly, a belt transmission assembly, a chain transmission assembly, a lead screw and nut transmission assembly, etc.

In order to facilitate the support of the transport drum 11, as shown in Fig. 3, the device for preparing an aerogel blanket 1000 further includes hollow cylindrical support drums 601 and holders 602. There are two hollow cylindrical support drums 601 and two holders 602 respectively, and there are also two frames 112 of the transport drum 11. Each frame 112 is connected to one of the hollow cylindrical support drums 601 via a bearing, and each hollow cylindrical support drum 601 is mounted on a mounting base (not shown in the figures, which may be the ground, a workbench, etc.) via a holder 602, so that the transport drum 11 can rotate about its own central axis.

Fig. 4 shows a schematic structural diagram of a transport means according to another embodiment of the present application. According to some other embodiments of the present application, as shown in Fig. 4, each transmission shaft 111 is connected to the frame 112 in such a way that it is rotatable about its own central axis, and the plurality of transmission shafts 111 are connected to each other via a linkage assembly 13. Each of the transport means further includes a first driving mechanism (not shown in the figures) configured to drive each transmission shaft 111 to rotate about its own central axis relative to the frame 112. The linkage assembly 13 is used to realize the linkage connection of the plurality of transmission shafts 111, so that the first driving mechanism drives the plurality of transmission shafts 111 to rotate synchronously, so as to transport the blanket substrate Z.

For example, as shown in Fig. 4, the linkage assembly 13 may be a plurality of chains 131 and a plurality of sprockets 132. Each transmission shaft 111 is provided with at least two sprockets 132, and the sprockets 132 of two adjacent transmission shafts 111 are connected to each other via a chain 131. When one of the transmission shafts 111 rotates, the other transmission shafts 111 rotate synchronously under the action of the linkage assembly 13. One of the plurality of transmission shafts 111 is a driving transmission shaft, and three sprockets 132 are arranged on the driving transmission shaft. Two sprockets 132 of the three sprockets 132 are configured to be connected to two sprockets 132 respectively on a former transmission shaft 111 and a latter transmission shaft 111 in the circumferential direction the transport drum 11, and the last sprocket 132 of the three sprockets 132 is a driving sprocket connected to the first driving mechanism provided with a driving sprocket 14 via a driving chain 15. When the first driving mechanism drives the driving sprocket 14 to rotate, the driving chain 15 transmits power to the driving sprocket 132, which in turn drives the driving transmission shaft 111 to rotate, so that all the transmission shafts 111 rotate about their own central axes.

In other embodiments of the present application, the linkage assembly 13 may also be in the form of a combination of a plurality of pulleys and a plurality of transmission belts, or in the form of a combination of a plurality of gears and ring gears.

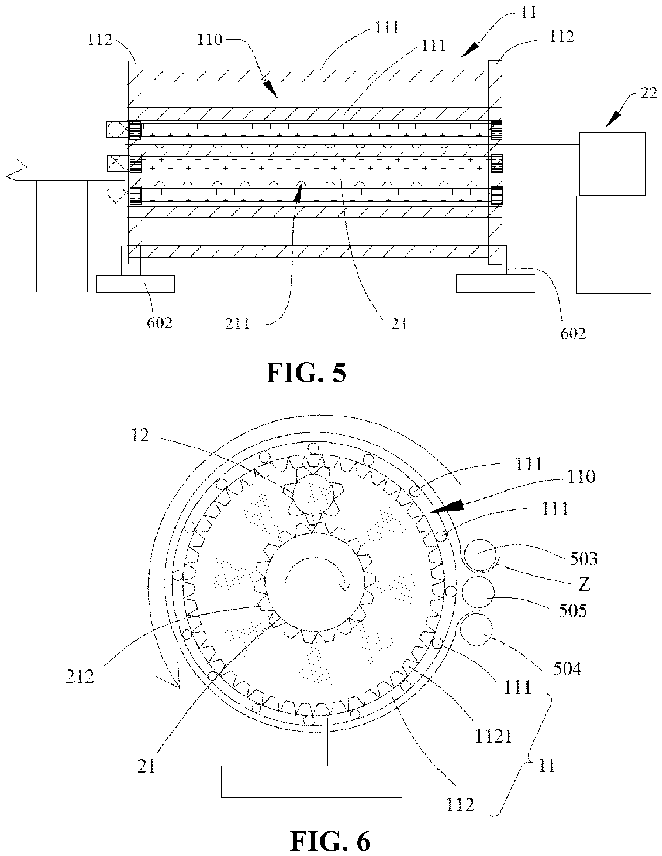

It should be noted that Fig. 5 shows a schematic assembly diagram of a transport means according to another embodiment of the present application. As shown in Fig. 5, when each transmission shaft 111 rotates about its own central axis, the transport drum 11 may not rotate about its own central axis as a whole. That is, the frame 112 may be directly connected to the holder 602, the holder 602 is mounted on the mounting base, each transmission shaft 111 rotatably cooperates with the frame 112, and the frame 112 does not rotate relative to the holder 602.

Fig. 6 shows a schematic assembly diagram of a spray means and a transport means according to an embodiment of the present application. According to some embodiments of the present application, as shown in Fig. 6, the device for preparing an aerogel blanket 1000 further includes a first guide roller 503 and the second guide roller 504. The first guide roller 503 is arranged adjacent to the drum wall and configured to guide the blanket substrate Z to the drum wall. The second guide roller 504 is arranged adjacent to both the drum wall and the first guide roller 503, and the second guide roller 504 is configured to guide the blanket substrate Z out from the drum wall. The first guide roller 503 and the second guide roller 504 are used to guide the blanket substrate Z to and out from the drum wall, and the first guide roller 503 and the second guide roller 504 are arranged adjacent to each other, so that the blanket substrate Z runs around the drum wall approximately by one circle to ensure that the blanket substrate Z and the drum wall have a large contact area, and the transport time is long, thereby facilitating the uniform impregnation of the blanket substrate Z with the sol or the gel catalyst.

When the first guide roller 503 and the second guide roller 504 cooperate with the first transport means 101 (referring to Fig. 1), the first guide roller 503 and the second guide roller 504 are both arranged adjacent to the drum wall of the first transport means 101, so as to guide the blanket substrate Z to the drum wall of the first transport means 101 and guide the blanket substrate Z sprayed with the sol out from the drum wall of the first transport means 101. When the first guide roller 503 and the second guide roller 504 cooperate with the second transport means 102 (referring to Fig. 1), the first guide roller 503 and the second guide roller 504 are both arranged adjacent to the drum wall of the second transport means 102, so as to guide the blanket substrate Z sprayed with the sol to the drum wall of the second transport means 102 and guide the blanket substrate Z sprayed with the gel catalyst out from the drum wall of the second transport means 102.

According to some embodiments of the present application, as shown in Fig. 6, the device for preparing an aerogel blanket 1000 further includes a third guide roller 505. The third guide roller 505 is located between the first guide roller 503 and the second guide roller 504, the third guide roller 505 is arranged adjacent to the drum wall, and the third guide roller 505 is arranged adjacent to both the first guide roller 503 and the second guide roller 504. When the first guide roller 503, the second guide roller 504 and the third guide roller 505 cooperate with the first transport means 101 (referring to Fig. 1), the blanket substrate Z is guided to the drum wall of the first transport means 101 under the guidance of the first guide roller 503 and the third guide roller 505, and the blanket substrate Z sprayed with the sol is guided out from the drum wall of the first transport means 101 under the guidance of the second guide roller 504 and the third guide roller 505, to ensure that the sol is uniformly distributed on the blanket substrate Z, so as to avoid the interference between the blanket substrate Z that is not sprayed with the sol and the blanket substrate Z sprayed with the sol, which affects the amount of the sol on the impregnated blanket substrate Z guided out from the drum wall so that the sol is non-uniformly distributed on the blanket substrate Z. When the first guide roller 503, the second guide roller 504 and the third guide roller 505 cooperate with the second transport means 102 (referring to Fig. 1), the blanket substrate Z is guided to the drum wall of the second transport means 102 under the guidance of the first guide roller 503 and the third guide roller 505, the blanket substrate Z sprayed with the gel catalyst is guided out from the drum wall of the second transport means 102 under the guidance of the second guide roller 504 and the third guide roller 505, to ensure that the gel catalyst is uniformly distributed on the blanket substrate Z, so as to avoid the interference between the blanket substrate Z that is not sprayed with the gel catalyst and the blanket substrate Z sprayed with the gel catalyst, which affects the amount of the gel catalyst on the impregnated blanket substrate Z guided out from the drum wall so that the gel catalyst is non-uniformly distributed on the blanket substrate Z. When the sol or the gel catalyst is non-uniformly distributed on the blanket substrate Z, the wet gel formed by the reaction between the gel catalyst and the sol on the blanket substrate Z will be non-uniformly distributed, thereby affecting the quality of the aerogel blanket.

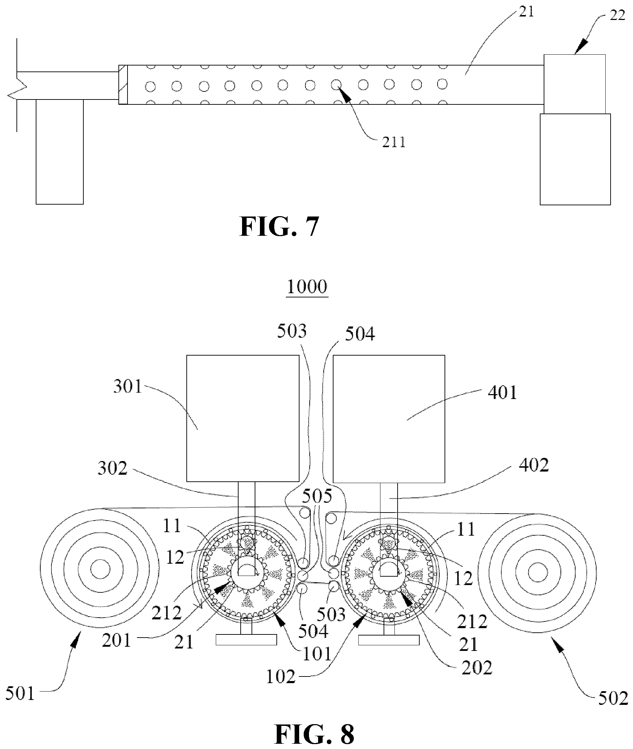

Fig. 7 shows a schematic structural diagram of a spray means according to an embodiment of the present application. According to some embodiments of the present application, as shown in Figs. 5, 6 and 7, each spray means (a collective term of the first spray means and the second spray means) includes a spray pipe 21. The spray pipe 21 is arranged inside the corresponding transport drum 11, a central axis of the spray pipe 21 coincides with the central axis of the transport drum 11, a pipe wall of the spray pipe 21 is provided with a through hole 211, and the spray pipe 21 is configured to be rotatable about its own central axis, so as to spray the sol or the gel catalyst from the spray pipe 21 onto the blanket substrate Z through the through hole 211. Through the rotation of the spray pipe 21, the sol or the gel catalyst is sprayed onto the blanket substrate Z during the rotation of the spray pipe 21, facilitating the impregnation of the blanket substrate Z with the sol or the gel catalyst.

For example, the spray pipe 21 of the first spray means 201 (referring to Fig. 1) is arranged inside the transport drum 11 of the first transport means 101. When the spray pipe 21 of the first spray means 201 rotates about its own central axis, the sol in the spray pipe 21 of the first spray means 201 is sprayed out through the through hole 211 of the spray pipe 21 to the blanket substrate Z transported by the transport drum 11 through the opening 110 of the transport drum 11, so as to impregnate the blanket substrate Z with the sol and make the blanket substrate Z fully impregnated. The spray pipe 21 of the second spray means 202 (referring to Fig. 1) is arranged inside the transport drum 11 of the second transport means 102. When the spray pipe 21 of the second spray means 202 rotates about its own central axis, the gel catalyst in the spray pipe 21 of the second spray means 202 is sprayed out through the through hole 211 of the spray pipe 21 to the blanket substrate Z transported by the transport drum 11, so as to allow the gel catalyst to enter the blanket substrate Z and make the blanket substrate Z fully impregnated, so that the gel catalyst and the sol undergo a rapid gel reaction to form a wet gel, and the gel is uniformly distributed on the blanket substrate Z.

According to some embodiments of the present application, as shown in Fig. 7, a plurality of through holes 211 are provided in the spray pipe 21, and the plurality of through holes 211 are distributed at intervals both in an axial direction of the spray pipe 21 and in a circumferential direction of the spray pipe 21, so that the sol or the gel catalyst sprayed out from the through hole 211 of the spray pipe 21 uniformly covers the blanket substrate Z, ensuring that the sol or the gel catalyst is uniformly distributed on the blanket substrate Z.

According to some embodiments of the present application, as shown in Figs. 5 and 7, each spray means further includes a second driving mechanism 22. The second driving mechanism 22 is configured to drive the spray pipe 21 to rotate about its own central axis. The second driving mechanism 22 is used to drive the spray pipe 21 to rotate about its own central axis, so as to spray the sol or the gel catalyst to the blanket substrate Z.

The second driving mechanism 22 provides a rotational driving force for the spray pipe 21, and the second driving mechanism 22 may be an electric motor having an output shaft drivably connected to one end of the spray pipe 21 to drive the spray pipe 21 to rotate about its own central axis. It should be noted that the output shaft of the electric motor may be directly connected to the spray pipe 21 to drive the rotation of the spray pipe 21. Alternatively, the output shaft of the electric motor may be connected to the spray pipe 21 via a transmission assembly, and a driving force of the electric motor is transmitted to the spray pipe 21 through a second transmission assembly to drive the spray pipe 21 to rotate. The second transmission assembly may be a gear transmission assembly, a chain transmission assembly, a belt transmission assembly, a lead screw and nut transmission assembly, etc.

According to some embodiments of the present application, as shown in Fig. 6, a rotation direction of the spray pipe 21 is opposite to a transport direction of the corresponding transport drum 11. The fact that the rotation direction of the spray pipe 21 is opposite to the transport direction of the corresponding transport drum 11 facilitates the impregnation of the blanket substrate Z with the sol or the gel catalyst sprayed to the blanket substrate Z, ensuring uniform impregnation with the sol or the gel catalyst.

For example, if the rotation direction of the spray pipe 21 of the first spray means 201 (referring to Fig. 1) is clockwise, the transport direction of the transport drum 11 of the first transport means 101 is counterclockwise; and if the rotation direction of the spray pipe 21 of the second spray means 202 (referring to Fig. 1) is clockwise, the transport direction of the transport drum 11 of the second transport means 102 is counterclockwise.

It should be noted that the transport direction of the transport drum 11 is the running direction of the blanket substrate Z around the drum wall of the transport drum.

In some other embodiments of the present application, the rotation direction of the spray pipe 21 may also be the same as that of the corresponding transport drum 11. When the rotation direction of the spray pipe 21 is the same as that of the corresponding transport drum 11, it is necessary to control the rotational speed of the spray pipe 21 to be inconsistent with the rotational speed of the corresponding transport drum 11, so as to facilitate the uniform impregnation of the blanket substrate Z with the sol or the gel catalyst.

According to some embodiments of the present application, the second driving mechanism 22 may not only provide the spray pipe 21 with the power driving required for its rotation about its own central axis, but also provide the transport drum 11 with the power driving required for its rotation about its own central axis at the same time. In other words, the second driving mechanism 22 can simultaneously drive the spray pipe 21 and the corresponding transport drum 11 to rotate respectively. For example, as shown in Fig. 6, the transport drum 11 can rotate about its own central axis, an outer peripheral wall of the spray pipe 21 is provided with a second ring gear 212, the inner wall of the frame 112 of the transport drum 11 is provided with a first ring gear 1121, a first gear 12 is arranged between the first ring gear 1121 and the second ring gear 212, the first gear 12 meshes with both the first ring gear 1121 and the second ring gear 212, and an output end of the second driving mechanism 22 (referring to Fig. 5) is drivably connected to the spray pipe 21. When the second driving mechanism 22 drives the spray pipe 21 to rotate about its own central axis, the second ring gear 212 on the spray pipe 21 drives the first gear 12 to rotate, the rotation of the first gear 12 drives the first ring gear 1121 to rotate, thereby realizing the rotation of the transport drum 11 about its own central axis. With this solution, it is possible not to separately provide a power driving mechanism for the transport drum 11, thereby saving costs.

According to some embodiments of the present application, by controlling the transport speeds of the first transport means 101 and the second transport means 102 and the rotational speed of the spray pipe 21, the amount of impregnation of the blanket substrate Z can be controlled without the need for the prior art method of using a scraper to control the amount of aerogel on a fiber blanket after impregnation.

It should be noted that the amount of impregnation refers to the amount of impregnation of the blanket substrate Z with the sol or the gel catalyst.

Fig. 8 shows a schematic structural diagram of a device for preparing an aerogel blanket 1000 according to another embodiment of the present application. According to some embodiments of the present application, as shown in Fig. 8, the device for preparing an aerogel blanket 1000 further includes a first storage container 301, a first delivery pipeline 302, a second storage container 401 and a second delivery pipeline 402. The first storage container 301 is configured to store the sol. The first delivery pipeline 302 is connected to the first storage container 301 and the spray pipe 21 of the first spray means 201, and the first delivery pipeline 302 is configured to deliver the sol from the first storage container 301 to the spray pipe 21 of the first spray means 201. The second storage container 401 is configured to store the gel catalyst. The second delivery pipeline 402 is connected to the second storage container 401 and the spray pipe 21 of the second spray means 202, and the second delivery pipeline 402 is configured to deliver the gel catalyst from the second storage container 401 to the spray pipe 21 of the second spray means 202. The sol is stored in the first storage container 301, and the first delivery pipeline 302 is connected to the first storage container 301 and the spray pipe 21 of the first spray means 201, so that the supply of the sol is facilitated and the uniform impregnation of the blanket substrate Z with the sol is ensured; and the gel catalyst is stored in the second storage container 401, and the second delivery pipeline 402 is connected to the second storage container 401 and the spray pipe 21 of the second spray means 202, so that the supply of the gel catalyst is facilitated and the uniform impregnation of the blanket substrate Z with the gel catalyst is ensured.

It should be noted that the spray pipe 21 rotatably cooperates with the corresponding delivery pipeline (the first delivery pipeline 302 or the second delivery pipeline 402), so that the spray pipe 21 is rotated about its own central axis under the action of the second driving mechanism 22, to prevent the rotation of the spray pipe 21 from affecting the connection between the spray pipe 21 and the corresponding delivery pipeline.

In order to facilitate the delivery of the sol from the first storage container 301 to the spray pipe 21 of the first spray means 201, a pumping means may be provided on the first delivery pipeline 302, and the pumping device provides a driving force for pumping the sol from the first storage container 301 to the spray pipe 21 of the first spray means 201 through the first delivery pipeline 302 to ensure continuous supply of the sol. Similarly, a pumping means may also be provided on the second delivery pipeline 402 for pumping the gel catalyst from the second storage container 401 to the spray pipe 21 of the second spray means 202 through the second delivery pipeline 402 to ensure continuous supply of the gel catalyst.

According to some embodiments of the present application, one end of the spray pipe 21 of the first spray means 201 is connected to the first delivery pipeline 302 to facilitate the delivery of the sol from the first storage container 301 to the spray pipe 21 through the first delivery pipeline 302, and the other end of the spray pipe 21 is connected to the second driving mechanism 22 (referring to Fig. 7) such that the second driving mechanism 22 drives the spray pipe 21 to rotate about its own central axis. One end of the spray pipe 21 of the second spray means 202 is connected to the second delivery pipeline 402 to facilitate the delivery of the gel catalyst from the second storage container 401 to the spray pipe 21 through the second delivery pipeline 402, and the other end of the spray pipe 21 is connected to the second driving mechanism 22 (referring to Fig. 7) such that the second driving mechanism 22 drives the spray pipe 21 to rotate about its own central axis. When the end of the spray pipe 21 connected to the second driving mechanism 22 is a closed end, the sol or the gel catalyst in the spray pipe 21 can be prevented from affecting the second driving mechanism 22.

It should be noted that the end of the spray pipe 21 may be configured as a closed end in such a way that the spray pipe 21 has openings 110 at two ends, and the opening 110 at the end of the spray pipe 21 connected to the second driving mechanism 22 is provided with a blocking plug (not shown in the figures), and the spray pipe 21 is blocked and then connected to the second driving mechanism 22; or the spray pipe 21 may be machined to have a tubular structure in which one end is closed and the other end has an opening 110.

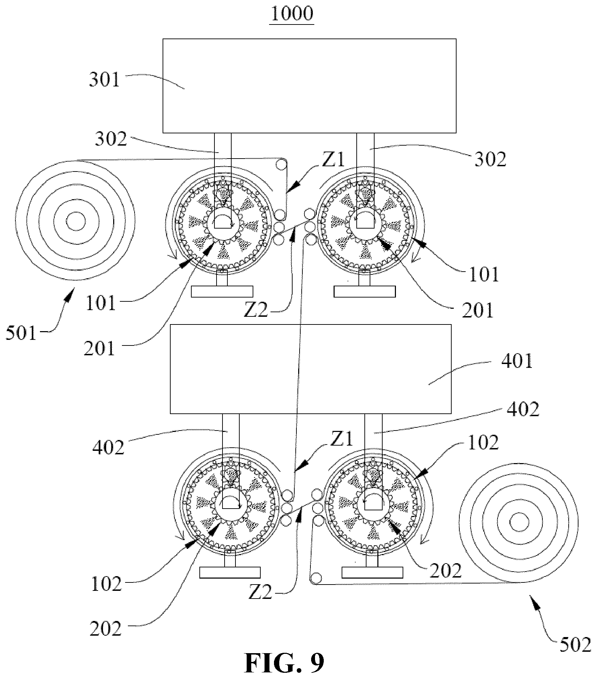

Fig. 9 shows a schematic structural diagram of a device for preparing an aerogel blanket 1000 according to still another embodiment of the present application. According to some embodiments of the present application, as shown in Fig. 9, two first transport means 101 and two first spray means 201 are provided, the two first transport means 101 are arranged in sequence in a running direction of the blanket substrate Z, the two first spray means 201 are in one-to-one correspondence with the two first transport means 101, and among the two first spray means 201, the upstream first spray means 201 is configured to spray the sol to a first side Z1 of the blanket substrate Z, and the downstream first spray means 201 is configured to spray the sol to a second side Z2 of the blanket substrate Z. The first side Z1 and the second side Z2 are two opposite sides in a thickness direction of the blanket substrate Z. The sol is sprayed to the first side Z1 and the second side Z2 of the blanket substrate Z to ensure the uniform impregnation of the blanket substrate Z with the sol.

It should be noted that the running direction of the blanket substrate Z refers to the delivery direction of the blanket substrate Z during the process of preparing the aerogel blanket. During the delivery of the blanket substrate Z, the upstream first spray means 201 sprays the sol to the first side Z1 of the blanket substrate Z transported by the corresponding first transport means 101, and following the delivery of the blanket substrate Z, the downstream first spray means 201 sprays the sol to the second side Z2 of the blanket substrate Z transported by the corresponding first transport means 101. When the sol is sprayed to the second side Z2 of the blanket substrate Z, the first side Z1 of the blanket substrate Z has been sprayed with the sol, so that the first side Z1 and the second side Z2 of the blanket substrate Z are both sprayed with the sol, facilitating the uniform impregnation with the sol.

According to some embodiments of the present application, as shown in Fig. 9, the transport directions of the two first transport means 101 are opposite to each other, so as to facilitate the layout of each means, make reasonable use of the installation space, and reduce space occupation.

The two first transport means 101 are arranged adjacent to each other, so as to reduce the transport time of the blanket substrate Z between the two first transport means 101. For example, after the blanket substrate Z is guided out from the drum wall of the upstream first transport means 101, the blanket substrate Z can be guided to the drum wall of the downstream first transport means 101 in a shorter time.

It should be noted that, as shown in Fig. 9, when there are two first spray means 201, the two first spray means 201 may share one first storage container 301, and each first spray means 201 is connected to the first storage container 301 via a first delivery pipeline 302. Alternatively, when there are two first spray means 201 and there are also two first storage containers 301, the two first spray means 201 are in one-to-one correspondence with the two first storage containers 301, and each first spray means 201 is connected to the corresponding first storage container 301 via a first delivery pipeline 302.

According to some embodiments of the present application, as shown in Fig. 9, two second transport means 102 and two second spray means 202 are provided, the two second transport means 102 are arranged in sequence in a running direction of the blanket substrate Z, the two second spray means 202 are in one-to-one correspondence with the two second transport means 102, and among the two second spray means 202, the upstream second spray means 202 is configured to spray the gel catalyst to a first side Z1 of the blanket substrate Z, and the downstream second spray means 202 is configured to spray the gel catalyst to a second side Z2 of the blanket substrate Z. The first side Z1 and the second side Z2 are two opposite sides in a thickness direction of the blanket substrate Z. The gel catalyst is sprayed to the first side Z1 and the second side Z2 of the blanket substrate Z to ensure the uniform impregnation of the blanket substrate Z with the gel catalyst, and then to ensure that the wet gel formed after the gel catalyst and the sol undergo a gel reaction is uniformly distributed on the blanket substrate Z.

It should be noted that the running direction of the blanket substrate Z refers to the delivery direction of the blanket substrate Z during the process of preparing the aerogel blanket. During the delivery of the blanket substrate Z, the upstream second spray means 202 sprays the gel catalyst to the first side Z 1 of the blanket substrate Z transported by the corresponding second transport means 102, and following the delivery of the blanket substrate Z, the downstream second spray means 202 sprays the gel catalyst to the second side Z2 of the blanket substrate Z transported by the corresponding second transport means 102. When the gel catalyst is sprayed to the second side Z2 of the blanket substrate Z, the first side Z1 of the blanket substrate Z has been sprayed with the gel catalyst, so that the first side Z1 and the second side Z2 of the blanket substrate Z are both sprayed with the gel catalyst, facilitating the uniform impregnation with the gel catalyst.

According to some embodiments of the present application, as shown in Fig. 9, the transport directions of the two second transport means 102 are opposite to each other, so as to facilitate the layout of each means, make reasonable use of the installation space, and reduce space occupation.

The two second transport means 102 are arranged adjacent to each other, so as to reduce the transport time of the blanket substrate Z between the two second transport means 102. For example, after the blanket substrate Z is guided out from the drum wall of the upstream second transport means 102, the blanket substrate Z can be guided to the drum wall of the downstream second transport means 102 in a shorter time.

It should be noted that, as shown in Fig. 9, when there are two second spray means 202, the two second spray means 202 may share one second storage container 401, and each second spray means 202 is connected to the second storage container 401 via a second delivery pipeline 402. Alternatively, when there are two second spray means 202 and there are also two second storage containers 401, the two second spray means 202 are in one-to-one correspondence with the two second storage containers 401, and each second spray means 202 is connected to the corresponding second storage container 401 via a second delivery pipeline 402.

According to some embodiments of the present application, as shown in Fig. 9, the device for preparing an aerogel blanket 1000 may include two first transport means 101, two first spray means 201, two second transport means 102 and two first spray means 201. The first side Z1 and the second side Z2 of the blanket substrate Z are both sprayed with the sol to ensure that the blanket substrate Z is uniformly impregnated with the sol, and the first side Z1 and the second side Z2 of the blanket substrate Z are both sprayed with the gel catalyst to ensure that the blanket substrate Z is uniformly impregnated with the gel catalyst. Alternatively, the device for preparing an aerogel blanket 1000 may include two first transport means 101, two first spray means 201, one second transport means 102 and one first spray means 201. The first side Z1 and the second side Z2 of the blanket substrate Z are both sprayed with the sol, and the first side Z1 or the second side Z2 of the blanket substrate Z is sprayed with the gel catalyst. Still alternatively, the device for preparing an aerogel blanket 1000 may include one first transport means 101, one first spray means 201, two second transport means 102 and two first spray means 201. The first side Z1 or the second side Z2 of the blanket substrate Z is sprayed with the sol, and the first side Z 1 and the second side Z2 of the blanket substrate Z are both sprayed with the gel catalyst.

According to some embodiments of the present application, the winding roller 502 winds up the blanket substrate Z impregnated with the gel catalyst and the sol, and the gel catalyst and the sol on the blanket substrate Z undergo a gel reaction after coming into contact with each other, so as to form a wet gel, the wound blanket substrate Z is aged and supercritically dried to obtain an aerogel blanket. The blanket substrate Z is aged at a temperature of 40-60 °C for 50-60 min.

As shown in Fig. 8, according to some embodiments of the present application, a device for preparing an aerogel blanket 1000 includes an unwinding roller 501, a first transport means 101, a first spray means 201, a second transport means 102, a second spray means 202, a first guide roller 503, a second guide roller 504, a third guide roller 505, and a winding roller 502. The unwinding roller 501, the first transport means 101, the second transport means 102 and the winding roller 502 cooperate with one another to transport the blanket substrate Z from the unwinding roller 501 to the winding roller 502.

Each transport means includes a transport drum 11 and a first gear 12. The transport drum 11 includes a plurality of transmission shafts 111 (referring to Fig. 6) and two frames 112 (referring to Fig. 5). Two ends of each transmission shaft 111 are respectively connected to the two frames 112, the plurality of transmission shafts 111 are arranged at intervals around a central axis of the transport drum 11 to form a drum wall of the transport drum 11, a gap between two adjacent transmission shafts 111 forms an opening 110, an inner wall of one of the two frames 112 is provided with a first ring gear 1121, and the first gear 12 meshes with the first ring gear 1121. The transport drum 11 can rotate about its own central axis, so as to transport the blanket substrate Z.

As shown in Fig. 8, each transport means cooperates with the first guide roller 503, the second guide roller 504 and the third guide roller 505, and the first guide roller 503 is arranged adjacent to the drum wall; the second guide roller 504 is arranged adjacent to both the drum wall and the first guide roller 503; the third guide roller 505 is located between the first guide roller 503 and the second guide roller 504, and the third guide roller 505 is arranged adjacent to the drum wall, the first guide roller 503 and the second guide roller 504. The blanket substrate Z is guided to the drum wall under the guidance of the first guide roller 503 and the third guide roller 505, and the blanket substrate Z is guided out from the drum wall between the second guide roller 504 and the third guide roller 505.

Each spray means includes a spray pipe 21 and a second driving mechanism 22 (referring to Fig. 7). The spray pipe 21 is arranged inside the corresponding transport drum 11, a central axis of the spray pipe 21 coincides with the central axis of the transport drum 11, a pipe wall of the spray pipe 21 is provided with a through hole 211 (referring to Fig. 7), and the spray pipe 21 is configured to be rotatable about its own central axis. One end of the spray pipe 21 of the first spray means 201 is connected to the first storage container 301 via a first delivery pipeline 302, and the sol in the first storage container 301 is delivered to the spray pipe 21 of the first spray means 201 through the first delivery pipeline 302. The other end of the spray pipe 21 of the first spray means 201 is drivably connected to an output end of the corresponding second driving mechanism 22, and the second driving mechanism 22 is configured to drive the spray pipe 21 to rotate about its own central axis. One end of the spray pipe 21 of the second spray means 202 is connected to the second storage container 401 via a second delivery pipeline 402, and the sol in the second storage container 401 is delivered to the spray pipe 21 of the second spray means 202 through the second delivery pipeline 402. The other end of the spray pipe 21 of the second spray means 202 is drivably connected to an output end of the corresponding second driving mechanism 22, and the second driving mechanism 22 is configured to drive the spray pipe 21 to rotate about its own central axis. When the second driving mechanism 22 drives the spray pipe 21 to rotate about its own central axis, the sol or the gel catalyst in the spray pipe 21 is sprayed out through the through hole 211 and sprayed to the blanket substrate Z through the opening 110 of the corresponding transport drum 11. An outer peripheral wall of the spray pipe 21 is provided with a second ring gear 212, the first gear 12 is located between the first ring gear 1121 and the second ring gear 212, and the first gear 12 meshes with the second ring gear 212. When the second driving mechanism 22 drives the spray pipe 21 to rotate about its own central axis, the second ring gear 212 drives the first gear 12 to rotate, and the rotation of the first gear 12 drives the first ring gear 1121 to rotate, thereby enabling the transport drum 11 to rotate about its own central axis.

The working principle of the device for preparing an aerogel blanket 1000 is as follows: the unwinding roller 501 unwinds the blanket substrate Z, the blanket substrate Z is transported toward the first transport means 101, and the blanket substrate Z passes between the first guide roller 503 and the third guide roller 505 and is transported to the transport drum 11 of the first transport means 101; when the blanket substrate Z is transported on the transport drum 11 of the first transport means 101, the second driving mechanism 22 of the first spray means 201 drives the corresponding spray pipe 21 to rotate about its own central axis, and the rotation direction of the spray pipe 21 is opposite to that of the transport drum 11. The sol in the spray pipe 21 of the first spray means 201 is sprayed from the inside of the transport drum 11 to the blanket substrate Z, the blanket substrate Z sprayed with the sol passes between the second guide roller 504 and the third guide roller 505 and is guided out from the transport drum 11 of the first transport means 101, and the blanket substrate Z is transported toward the second transport means 102. The blanket substrate Z passes between the first guide roller 503 and the third guide roller 505 and is transported to the transport drum 11 of the second transport means 102. When the blanket substrate Z is transported on the transport drum 11 of the second transport means 102, the second driving mechanism 22 of the second spray means 202 drives the corresponding spray pipe 21 to rotate about its own central axis, and the rotation direction of the spray pipe 21 is opposite to that of the transport drum 11; and the gel catalyst in the spray pipe 21 of the second spray means 202 is sprayed from the inside of the transport drum 11 to the blanket substrate Z, and the blanket substrate Z sprayed with the gel catalyst passes between the second guide roller 504 and the third guide roller 505 and is guided out from the transport drum 11 of the second transport means 102, and the blanket substrate Z is transported toward the winding roller 502 and wound up by the winding roller 502.

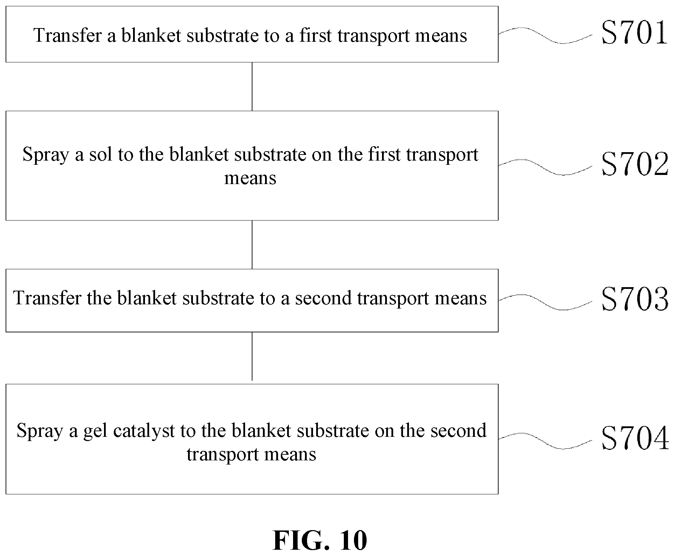

A method for preparing an aerogel blanket provided according to an embodiment of the present application will be described below, the method using the device for preparing an aerogel blanket 1000 described above. Fig. 10 shows a schematic flowchart of a method for preparing an aerogel blanket according to an embodiment of the present application. As shown in Fig. 10, the method includes:
S701: transferring a blanket substrate Z to a first transport means 101, and transporting the blanket substrate Z by the first transport means 101;
S702: spraying a sol to the blanket substrate Z on the first transport means 101;
S703: transferring the blanket substrate Z sprayed with the sol to a second transport means 102, and transporting the blanket substrate Z by the second transport means 102; and
S704: spraying a gel catalyst to the blanket substrate Z on the second transport means 102.

In the method for preparing an aerogel blanket according to the embodiment of the present application, the blanket substrate Z is transported by the first transport means 101, and the sol is sprayed to the blanket substrate Z while the first transport means 101 transports the blanket substrate Z, so as to facilitate the uniform impregnation with the sol; and the blanket substrate Z sprayed with the sol is transported by the second transport means 102, so that the gel catalyst is sprayed to the blanket substrate Z while transporting the blanket substrate Z, facilitating the rapid gel reaction between the sol and the gel catalyst to form a wet gel, thereby shortening the preparation period and improving the preparation efficiency of the aerogel blanket.

Before step "S701: transferring a blanket substrate Z to a first transport means 101, and transporting the blanket substrate Z by the first transport means 101", a sol and a gel catalyst are prepared.

Preparation of the sol: a silica solution is prepared from orthosilicate, ethanol and water in a molar ratio of orthosilicate to ethanol to water of 1:(4-8):(3-5), an acid is then added into the silica solution, and the silica solution is adjusted to have a pH of 3 to 4 to obtain the silica sol.

Preparation of the gel catalyst: an aqueous ammonia solution with a mass fraction of 15-30 wt% is used as the gel catalyst.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A device for preparing an aerogel blanket, the device comprising:
a first transport means configured to transport a blanket substrate;
a first spray means configured to spray a sol to the blanket substrate on the first transport means;
a second transport means arranged downstream of the first transport means and configured to transport the blanket substrate sprayed with the sol; and
a second spray means configured to spray a gel catalyst to the blanket substrate on the second transport means.

2. The device for preparing an aerogel blanket according to claim 1, wherein each transport means comprises a transport drum, a drum wall of the transport drum being configured to transport the blanket substrate in a circumferential direction of the transport drum and being provided with an opening, the first spray means is configured to spray the sol from the inside of the corresponding transport drum to the blanket substrate, and the second spray means is configured to spray the gel catalyst from the inside of the corresponding transport drum to the blanket substrate.

3. The device for preparing an aerogel blanket according to claim 2, wherein the drum wall is composed of a plurality of transmission shafts arranged at intervals around a central axis of the transport drum, each transmission shaft being parallel to the central axis of the transport drum, and a gap between two adjacent transmission shafts forms the opening; and
the transport drum further comprises a frame to which the plurality of transmission shafts are fixed.

4. The device for preparing an aerogel blanket according to claim 3, wherein each transport means further comprises a first driving mechanism configured to drive the transport drum to rotate about its own central axis.

5. The device for preparing an aerogel blanket according to claim 3, wherein each transmission shaft is connected to the frame in such a way that it is rotatable about its own central axis, and the plurality of transmission shafts are connected to each other via a linkage assembly; and
each transport means further comprises a first driving mechanism configured to drive each transmission shaft to rotate about its own central axis relative to the frame.

6. The device for preparing an aerogel blanket according to any one of claims 2-5, further comprising:
a first guide roller arranged adjacent to the drum wall and configured to guide the blanket substrate to the drum wall; and
a second guide roller arranged adjacent to both the drum wall and the first guide roller and configured to guide the blanket substrate out from the drum wall.

7. The device for preparing an aerogel blanket according to any one of claims 2-6, wherein each spray means comprises a spray pipe arranged inside the corresponding transport drum, a central axis of the spray pipe coinciding with the central axis of the transport drum, a pipe wall of the spray pipe being provided with a through hole, and the spray pipe being configured to be rotatable about its own central axis, so as to spray the sol or the gel catalyst from the spray pipe onto the blanket substrate through the through hole.

8. The device for preparing an aerogel blanket according to claim 7, wherein a rotation direction of the spray pipe is opposite to a transport direction of the corresponding transport drum.

9. The device for preparing an aerogel blanket according to claim 7 or 8, wherein each spray means further comprises a second driving mechanism configured to drive the spray pipe to rotate about its own central axis.

10. The device for preparing an aerogel blanket according to any one of claims 7-9, further comprising:
a first storage container configured to store the sol;
a first delivery pipeline connected to the first storage container and the spray pipe of the first spray means, and configured to deliver the sol from the first storage container to the spray pipe of the first spray means;
a second storage container configured to store the gel catalyst; and
a second delivery pipeline connected to the second storage container and the spray pipe of the second spray means, and configured to deliver the gel catalyst from the second storage container to the spray pipe of the second spray means.

11. The device for preparing an aerogel blanket according to any one of claims 1-10, wherein two first transport means and two first spray means are provided, the two first transport means are arranged in sequence in a running direction of the blanket substrate, the two first spray means are in one-to-one correspondence with the two first transport means, and among the two first spray means, the upstream first spray means is configured to spray the sol to a first side of the blanket substrate, and the downstream first spray means is configured to spray the sol to a second side of the blanket substrate, the first side and the second side being two opposite sides in a thickness direction of the blanket substrate.

12. The device for preparing an aerogel blanket according to claim 11, wherein transport directions of the two first transport means are opposite to each other.

13. The device for preparing an aerogel blanket according to any one of claims 1-12, wherein two second transport means and two second spray means are provided, the two second transport means are arranged in sequence in a running direction of the blanket substrate, the two second spray means are in one-to-one correspondence with the two second transport means, and among the two second spray means, the upstream second spray means is configured to spray the gel catalyst to a first side of the blanket substrate, and the downstream second spray means is configured to spray the gel catalyst to a second side of the blanket substrate, the first side and the second side being two opposite sides in a thickness direction of the blanket substrate.

14. The device for preparing an aerogel blanket according to claim 13, wherein transport directions of the two second transport means are opposite to each other.

15. A method for preparing an aerogel blanket, the method comprising:
transferring a blanket substrate to a first transport means, and transporting the blanket substrate by the first transport means;
spraying a sol to the blanket substrate on the first transport means;
transferring the blanket substrate sprayed with the sol to a second transport means, and transporting the blanket substrate by the second transport means; and
spraying a gel catalyst to the blanket substrate on the second transport means.
